# EUROPEAN PATENT SPECIFICATION

(11) **EP 3 261 318 B1**
(45) Date of publication and mention of the grant of the patent: **11.09.2019**
(21) Application number: 17186193.3
(22) Date of filing: 30.03.2012
(51) Int. Cl.: H04L 29/06

(54) **METHOD FOR SHARING CONTENT USING TEMPORARY KEYS AND ELECTRONIC DEVICE USING THE SAME**
VERFAHREN ZUM GEMEINSAMEN NUTZEN VON INHALTEN UNTER VERWENDUNG VON VORÜBERGEHENDEN SCHLÜSSELN UND ELEKTRISCHE VORRICHTUNG DAMIT
PROCÉDÉ PERMETTANT DE PARTAGER DES CONTENUS AU MOYEN DE CLÉS TEMPORAIRES ET DISPOSITIF ÉLECTRIQUE L'UTILISANT

(30) Priority: 27.06.2011 KR 20110062510
(43) Date of publication of application: 27.12.2017
(62) Divisional of application: 12162512.3
(73) Proprietor: Samsung Electronics Co., Ltd., Gyeonggi-do 16677 (KR)
(72) Inventor: JUNG, Jae-yoon, Seoul (KR); CHO, Jung-yon, Gyeonggi-do (KR); HONG, Jin-woo, Gyeonggi-do (KR); PARK, Si-hong, Seoul (KR)
(74) Representative: Appleyard Lees IP LLP

(56) References cited:
- US-A1- 2008 178 252

## Description

### BACKGROUND

### 1. Field

Devices and methods consistent with the present exemplary embodiments relate to sharing content, and more particularly, to sharing content by establishing a network connection using a temporary key.

### 2. Description of the Related Art

Recently, as networking functions are added to many electronic devices, a home networking system is developing which includes many electronic device. That is, with a network system, a user is able to control other electronic devices using a single electronic device or transmit and/or receive content to and from the other electronic devices. However, a communication using such a home network system is possible only within a limited area, generally only inside of a home.

However, users want to access content stored in a device at home while they are outside where an Internet connection is available, and further want to share content with other electronic devices outside of the home.

Therefore, there is a need for methods that allow users to share content stored in electronic devices at home with other devices from outside more conveniently. US 2008/178252 discloses an arrangement for securely sharing data on a network by enabling a user to select and install a commonly-shared password in each terminal device that is on the network. The independent claims appended hereto are characterized over this document.

### SUMMARY

Exemplary embodiments address at least the above problems and/or disadvantages and other disadvantages not described above. However, an exemplary embodiments is not required to overcome the disadvantages described above, and an exemplary embodiment may not overcome any of the problems described above.

According an aspect of an exemplary embodiment, there is provided a method for sharing content of an electronic device as defined by claim 1 of the claims appended hereto.

The GUI may include an item for setting at least one of an identification of the temporary key, a password of the temporary key and an expiration date of the temporary key.

The registering may include transmitting information of the electronic device along with the temporary key to the server and registering the information of the electronic device along with the temporary key with the server.

The establishing of the network connection may further include: generating another GUI including information that the network connection is established with the at least one other electronic device.

The method may further include: displaying a list including the at least one other electronic device.

The method may further include: if a command is input by a user, generating another GUI for releasing the temporary key; and releasing the temporary key.

The releasing of the temporary key may include inputting the registered temporary key to the other GUI.

The performing the one of the transmitting the content to the at least one other electronic device and the receiving the content from the at least one other electronic device may include performing the one of the transmitting the content to the at least one other electronic device and receiving the content from the at least one other electronic device either via the server or directly.

The temporary key may include at least one of a disposable identification and a disposable password.

The displaying may include displaying the GUI if a button is pressed by a user.

According an aspect of another exemplary embodiment, there is provided an electronic device as defined by claim 12 of the claims appended hereto.

The GUI may include an item for setting at least one of an identification of the temporary key, a password of the temporary key and an expiration date of the temporary key.

### BRIEF DESCRIPTION OF THE DRAWINGS

The above and/or other aspects of the will be more apparent by describing certain exemplary embodiments with reference to the accompanying drawings, in which:
FIG. 1 is a view illustrating a content sharing system according to an exemplary embodiment;
FIG. 2 is a block diagram illustrating an electronic device according to an exemplary embodiment;
FIG. 3 is a view illustrating a GUI for registering a temporary key according to an exemplary embodiment;
FIG. 4 is a view illustrating a GUI for another electronic device to be authenticated by a server according to an exemplary embodiment;
FIG. 5 is a view of a GUI containing information that a network connection is established with the other electronic device according to an exemplary embodiment;
FIG. 6 is a view illustrating a list of other electronic devices with which a network connection has been established according to an exemplary embodiment;
FIG. 7 is a view illustrating a GUI for releasing a temporary key according to an exemplary embodiment;
FIG. 8 is a flowchart provided to explain a method for sharing content of an electronic device according to an exemplary embodiment;
FIG. 9 is a flowchart provided to explain a method for sharing content of a content sharing system according to an exemplary embodiment;

### DETAILED DESCRIPTION OF EXEMPLARY EMBODIMENTS

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding. Also, well-known functions or constructions are not described in detail since they would obscure explanation with unnecessary detail. The terms "unit" and "block" as used herein mean a hardware component, such as a processor or circuit, and/or a software component that is executed by a hardware component such as a processor.

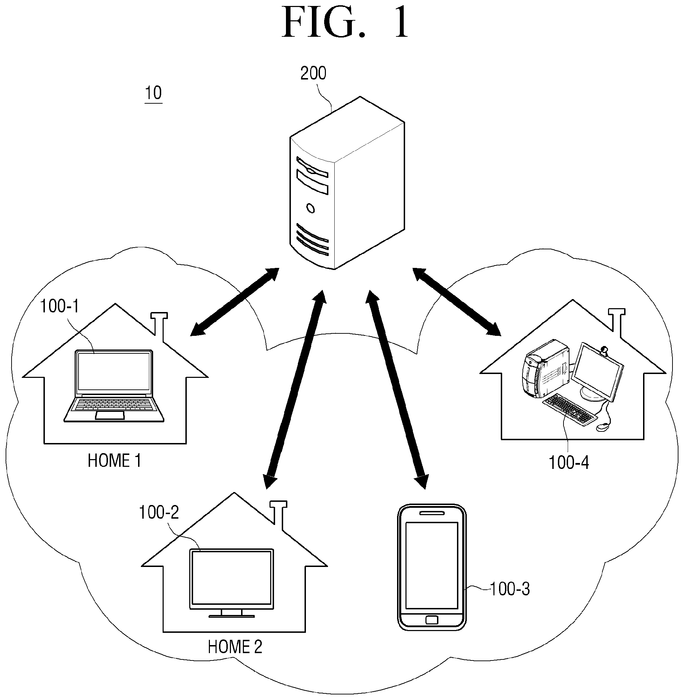

FIG. 1 is a view illustrating a content sharing system 10 according to an exemplary embodiment. As illustrated in FIG. 1, the content sharing system 10 includes a plurality of other electronic devices 100-1, 100-2, 100-3, 100-4 and a server 200.

One of the plurality of electronic devices 100-1 (hereinafter, referred to as 'electronic device') registers a temporary key with a server, other electronic devices 100-2, 100-3, 100-4 (hereinafter, referred to as 'other electronic devices'), excluding the electronic device 100-1, are authenticated by the server 200, using the temporary key registered with the server 200. When the other electronic devices 100-2, 100-3, 100-4 are authenticated by the server, the plurality of other electronic devices 100-1, 100-2, 100-3, 100-4 form a cloud network and transmit and/or receive content.

Herein, the temporary key is a One-Time Password (OTP), which is different from general identifications (IDs) or passwords, to authenticate temporarily the other electronic device 100-2 and thus, may be released and may be setup by a user to have an expiration date after which the OTP will no longer be valid.

In this case, the plurality of electronic devices 100-1,100-2,100-3,100-4 may be embodied as one of a notebook, a TV, a smart phone a computer, etc., which contain a communication function to access the server 200 as illustrated in FIG. 1. But this is only an example. The technical features of the present exemplary embodiments may be applied to any other electronic device which is able to access the server 200.

If the electronic device 100-1 requests registration of a temporary key, the server 200 receives the information of the temporary key and the electronic device 100-1 from the electronic device 100-1. And if the other electronic devices 100-2, 100-3, 100-4 respectively request authentication from the server 200 using the temporary key, the server 200 authenticates the other electronic devices 100-2, 100-3, 100-4 and transmits the information of the other electronic devices 100-2, 100-3, 100-4 requesting for forming a cloud network and the information of the other electronic devices 100-2, 100-3, 100-4 to the electronic device 100-1.

Accordingly, the electronic device 100-1 and the other electronic devices 100-2, 100-3, 100-4 form a cloud network, and transmit and/or receive content. In this case, the electronic device 100-1 may transmit content to the other electronic devices 100-2, 100-3, 100-4 via the server 200, or directly, i.e., without using the server 200.

In the case of sharing content using a temporary key, the scope of sharing content may be more limited compared to the case where general IDs and passwords are used, or where content is used directly from the electronic device 100-1. For instance, in a case where a general ID and password are used, or when content is used directly from electronic device 100-1, all of the content stored in a hard disk may be available. However, in a case of sharing content using a temporary key, only content which are stored in certain specified places on a hard disk may be available.

As described above, content may be shared more conveniently by forming a cloud network using a temporary key, and the security problem of leakage of user information in a user account may be addressed.

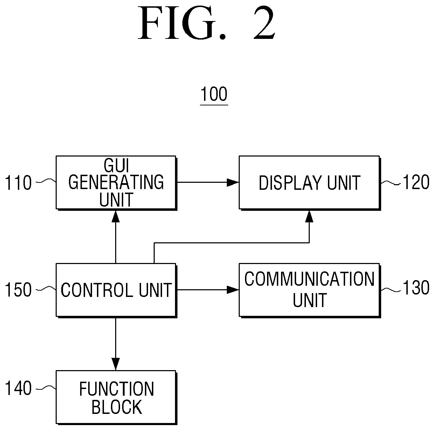

With reference to FIGS. 2 to 7, the electronic device 100 is explained in greater detail as follows. FIG. 2 is a block diagram of the electronic device 100 according to an exemplary embodiment. As illustrated in FIG. 2, the electronic device 100 comprises a GUI generating unit 110, a display unit 120, a communication unit 130, a function block 140 and a control unit 150.

The GUI generating unit 110 generates various GUIs for providing information or setting up an environment of an electronic device, and transmits it to the display unit 120.

Specifically, in a case where the electronic device 100 works as the electronic device 100-1 registering a temporary key, the GUI generating unit 110 may generate a GUI for setting a temporary key. Further, the GUI generating unit 100-1 may generate a GUI containing information that the other electronic devices 100-2, 100-3, 100-4 are authenticated by a server and access a cloud network. Also, the GUI generating unit 110 may generate a list of the other electronic devices 100-2, 100-3, 100-4 which are included in the cloud network, and a GUI for releasing the temporary key.

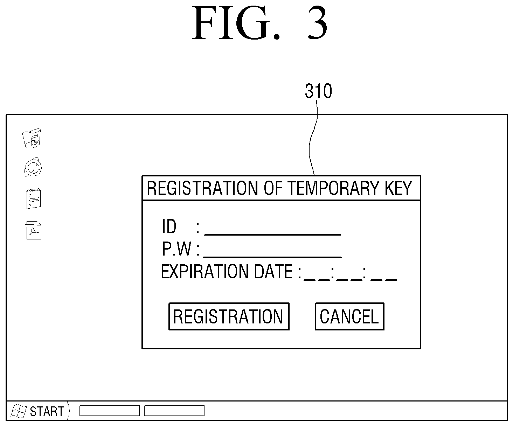

On the other hand, in a case where the electronic device 100 works as one of the other electronic devices 100-2, 100-3, 100-4, the GUI generating unit 110 may generate a GUI for authentication by the server and accessing the cloud network. Various GUIs described above will be explained in greater detail with reference to FIGS. 3 to 7.

The display unit 120 outputs images which are input from various sources and processed. In this case, the display unit 120 may display the GUI generated by the GUI generating unit 110 together.

The communication unit 130 performs a communication with the external server 200 or other electronic devices. In this case, the communication unit 130 could be embodied as communication modules such as a local area network (LAN) card, a modem, a Wi-Fi mode, a Bluetooth mode, etc.

The function block 140 performs the general functions of an electronic device, such as described in the following examples.
1) In a case where an electronic device is a computer or a notebook, the function block 140 operates various kinds of programs and applications.
2) In a case where an electronic device is a television, the function block 140 receives broadcasting content from an outside source and plays it.
3) In a case where an electronic device is a smart phone (mobile phone), the function block 140 performs a communication function communicating with an external device.
4) In a case where an electronic device is a Blue-ray Disk Player (BDP), the function block 140 plays content (especially, video content).
5) In a case where an electronic device is a game machine, the function block 140 saves and plays content (especially, game content).
6) In a case where an electronic device is a HTS (Home Theater System), the function block 140 plays and outputs content (especially, audio content).

The controlling unit 140 controls overall functions of the electronic device 100 by user's inputting. Specifically, the control unit 150 registers a temporary key with the external server 200, forms a cloud network with the other electronic devices 100-2, 100-3, 100-4 and shares content.

Specifically, the control unit 150 controls a GUI generating unit 110 to generate a temporary key registration GUI 310 in order to register a temporary key as illustrated in FIG. 3. In this case, the temporary key registration GUI 310 may be generated either if a user accesses server 200 and a predetermined menu in the server 200 is selected or if a predetermined button outside of the electronic device 100-1 is pressed. But this is only an exemplary embodiment, and the temporary key registration GUI 310 may be generated by other inputs by a user.

As illustrated in FIG. 3, the temporary key registration GUI 310 contains an item for setting the ID, password and expiration date of a temporary key. But this is only exemplary embodiments. The temporary key registration GUI 310 may contain items for setting only one or two items out of the ID, password and expiration date of temporary key, and may contain other setting information for setting a temporary key (for example, a user name).

If a temporary key is set via the temporary key registration GUI 310, the control unit 150 controls the communication unit 130 to transmit the information of the temporary key which is set via the temporary key registration GUI 310 and the information of the electronic device 100-1 to the server 200. In this case, the information of the electronic device 100-1 may include the network address, the type and the product name of electronic device 100-1 and etc.

As described above, if the information of a temporary key and the information of the electronic device 100-1 is transmitted from the electronic device 100-1 to the server 200, the server 200 authenticates the other electronic devices 100-2, 100-3, 100-4 using the information of the temporary key transmitted from the electronic device 100-1, and transmits the information of the electronic device 100-1 to the other electronic devices 100-2, 100-3, 100-4.

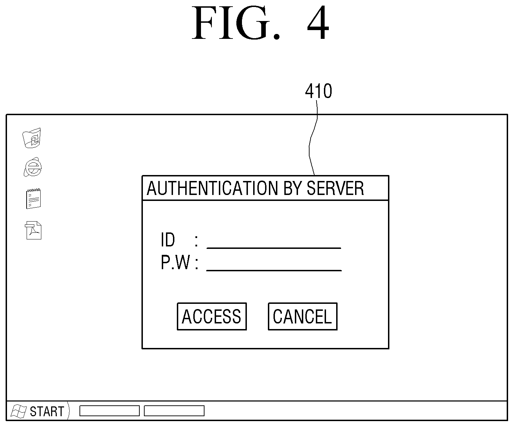

In the case that the electronic device 100 works like the other electronic device 100-2 to be authenticated by the server 200, the control unit 150 generates a server authentication GUI 410 for authentication by a server. Specifically, as illustrated in FIG. 4, the control unit 150 generates the server authentication GUI 410 for authentication, using the ID or password of the temporary key which is registered with the server 200. But this is only an exemplary embodiment, and in a case where only one of ID and password is set via the temporary key registration GUI 310, it may be allowed to input either one of corresponding ID or password to the server authentication GUI 410.

If the information of a temporary key is input to the server authentication GUI 410, the control unit 150 transmits the information of the temporary key which is input to the server authentication GUI 410 to the server 200. If the information of the temporary key, which is input to the server authentication GUI 410, and the information of the temporary key, which is registered with the server 200, match each other, the control unit 150 is authenticated by the server 200 and may control the communication unit 130 to receive the information of the electronic device 100-1 which registered the temporary key with the server 200. And the control unit 150 may control the communication unit 130 to transmit the information of the other electronic device 100-2 to server 200.

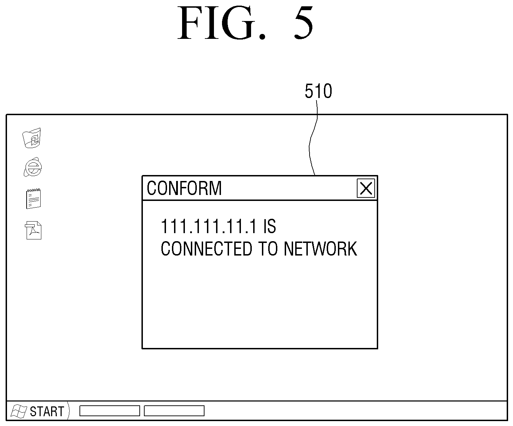

As explained in relation to FIG. 4, if the other electronic device 100-2 is authenticated by the server 200, the control unit 150 of the electronic device 100-1 controls the communication unit 130 to receive the information of the other electronic device 100-2 and generates a GUI 510 containing the information that the other electronic device 100-2 which is authenticated by the server 200 is accessed to a cloud network. In this case, the GUI 510 containing the information that the other electronic device 100-2 is accessed to network may contain information such as the IP address or ID of the other electronic device 100-2 as illustrated in FIG. 5.

In addition, if a certain command is input by a user, the control unit 150 may control the GUI generating unit 110 to generate an access list 610 containing the information of the other electronic device 100-2 which is connected to a cloud network.

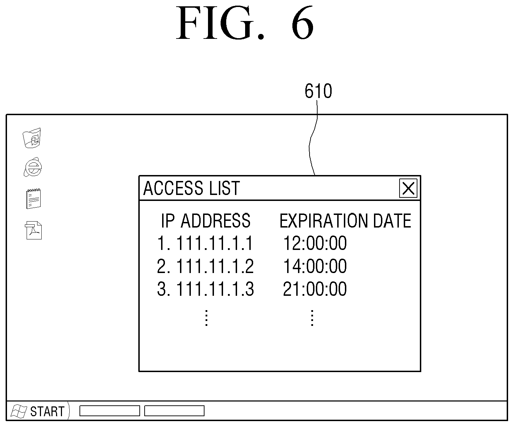

In this case, the access list 610 may include the information of IP address of other electronic device 100-2, the expiration date of a temporary key and etc as illustrated in FIG. 6. But this is only an exemplary embodiment, and the access list 610 may contain other information of the other electronic device 100-2.

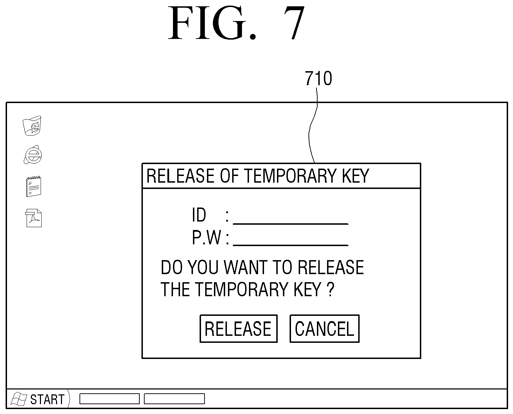

Also, the control unit 150 may release a temporary key by a user's command. Specifically, if the server 200 is accessed and a certain menu is selected, or a certain button outside of the electronic device 100-1 is pressed, the control unit 150 may generate a temporary key releasing GUI 710 as illustrated in FIG. 7.

In this case, the generated temporary key releasing GUI 710 may contain an item for inputting an ID and a password for releasing the temporary key which is set in FIG. 3. But this is only an exemplary embodiment, and the temporary key releasing GUI 710 may contain items for other purposes such as initialization.

If an ID and a password are input to the temporary key releasing GUI 710, the control unit 150 transmits the inputted temporary key to the server 200. And if the information of the temporary key which is input to the key releasing GUI 710 and the information of the registered temporary key match each other, the server 200 releases the network with other electronic device 100-2 using the registered temporary key.

However, releasing all of the network connections with other electronic devices 100-2 using the registered temporary key by releasing the registered temporary key is only one exemplary embodiment, and it is possible to selectively release the network access of any number of the electronic devices 100-2 from among the plurality of other electronic devices 100-2.

In addition, in a case where the expiration date of the temporary key which is set via temporary key registration GUI 310, such as illustrated in FIG. 3, has passed, the control unit 150 transmits such information to the server 200. If the information that expiration date has passed is transmitted to the server 200, the server 200 releases the network of the other electronic devices 100-2 which have expired.

As described above, the electronic device 100 forms a network using a temporary key and thus, a user may share content more conveniently and the security problem of leakage of user information in a user account may be solved.

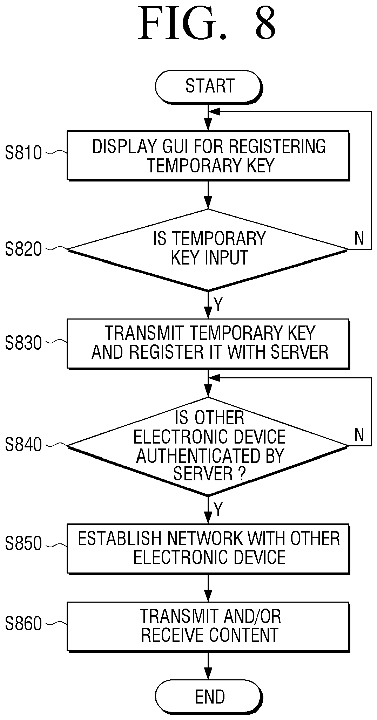

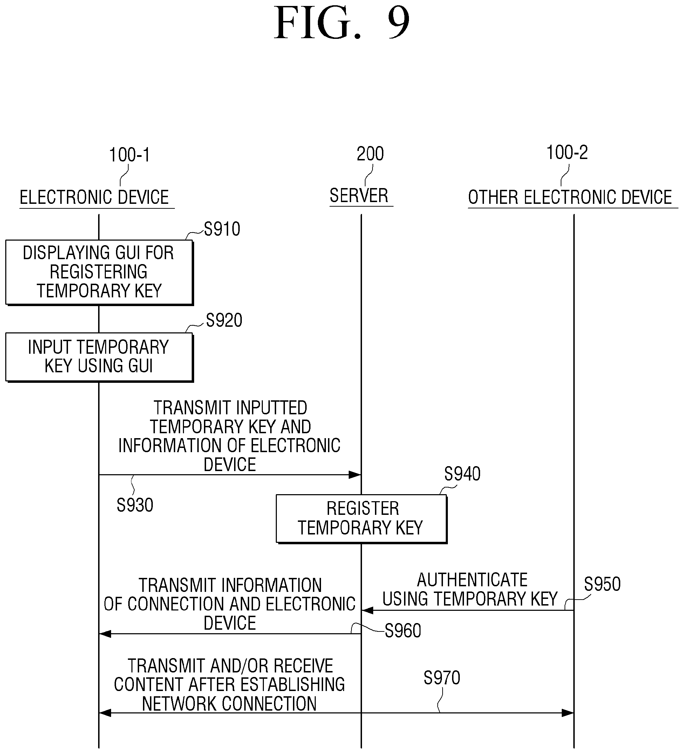

With reference to FIG. 8 and FIG. 9, the method for sharing content will be explained in greater detail as below.

FIG. 8 is a flowchart provided to explain a method for sharing content of the electronic device 100-1 according to an exemplary embodiment.

If a certain command is input by a user, the electronic device 100-1 displays a GUI for registering a temporary key (S810). In this case, if a user access the server 200, and if a certain menu in the server 200 is selected or a certain button outside of the electronic device 100-1 is pressed, the temporary key registration GUI 310 may be generated. The temporary key registration GUI 310 may contain an item for setting ID, password and expiration date of a temporary key as illustrated in FIG. 3.

If a temporary key is input by a user (S820-Y), the electronic device 100-1 transmits and registers the information of the temporary key to and with the server 200 (S830). Specifically, the electronic device 100-1 transmits the information of the temporary key which is set via the temporary key registration GUI 310 along with the information of the electronic device 100-1 to server 200.

If the temporary key is registered with the server 200, the electronic device 100-1 determines whether the other electronic device 100-2 is authenticated by the server 200 (S840). Specifically, if the information of the temporary key which is registered through operations S820 and S830 in the other electronic device 100-2 is input, the server 200 confirms the authentication of the other electronic device 100-2 and transmits the access information of the electronic device 100-1 and the information of the other electronic device 100-2. If the access information of the electronic device 100-1 and the information of the other electronic device 100-2 is transmitted, the electronic device 100-1 determines that the other electronic device 100-2 is authenticated by the server 200.

If the other electronic device 100-2 is authenticated by the server 200, the electronic device 100-1 forms a network with the other electronic device 100-2 (S850). If a network connection is established, the electronic device 100-1 transmits and/or receives content to and from the other electronic device 100-2 (S860).

As described above, the electronic device 100-1 forms a cloud network by registering a temporary key with the server and thus, a user may share content more conveniently with the other electronic device, and the security problem of leakage of user information in a user account may be solved by using a temporary key.

FIG. 9 is a flowchart provided to explain a method for sharing content of the content sharing system 10 according to an exemplary embodiment.

If a certain command is input by a user, the electronic device 100-1 displays a GUI for registering a temporary key (S910). A temporary key is input via the temporary key registration GUI 310 according to a user input (S920).

If a temporary key is input, the electronic device 100-1 transmits the information of the inputted temporary key and the information of the electronic device 100-1 to the external server 200 (S930). If the information of temporary key and the information of the electronic device 100-1 is transmitted to the external server 200, the server 200 registers the key inputted with the temporary key registration GUI 310 as an One-Time Password (S940).

After the temporary key is registered, the other electronic device 100-2 is authenticated by the server using the temporary key (S950). Specifically, if the temporary key is input to the server access GUI 410 of the other electronic device 100-2 as illustrated in FIG. 4, the other electronic device 100-2 transmits the information of the temporary key to the server 200. If the information of the temporary key which is input to the server access GUI 410 is transmitted to the server 200, the server 200 determines whether the information of the temporary key transmitted from the other electronic device 100-2 and the registered information of the key match each other. If the information of the temporary key transmitted from the other electronic device 100-2 and the registered information of the temporary key match each other, the server 200 authenticates the other electronic device 100-1 as the electronic device 100 which will access a network.

If the other electronic device 100-2 is authenticated by the server 200, the server 200 transmits the access information of the other electronic device 100-2 and the information of the other electronic device 100-2 to electronic device 100-1 (S960). In this case, the information of other electronic device 100-2 may include information such as the network address and ID of the other electronic device 100-2.

If the access information of the other electronic device 100-2 is transmitted to the electronic device 100-1, the electronic device 100-1 forms a network with the other electronic device 100-2 and transmits and/or receives content (S970) .

By the content sharing system 10 described above, a user may use content stored in electronic devices at home using an electronic device outside of the home and the security problem may be solved by using a temporary key.

Further, another exemplary embodiment may include a computer-readable recording medium including a program for running the dual view display method as described above. The computer-readable recording medium may include various types of recording apparatuses in which data being readable by a computer system is stored. Examples of the computer-readable recording medium may include a ROM, a RAM, a CD-ROM, a magnetic tape, a floppy disk, an optical data storing apparatus, etc. Further, computer-readable recording media may be distributed in computer systems connected through a network, so that they can store and execute codes readable by the computer in a distributed method.

The foregoing embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for sharing content of an electronic device, the method comprising:
displaying (S810) on the electronic device, a Graphical User Interface, GUI, for registering a temporary key for authentication;
if a temporary key is inputted (S820Y) by a user via the GUI, transmitting (S830) the inputted temporary key from the electronic device to a server, so that the inputted temporary key is registered by the server;
establishing a network with other electronic device which is authenticated by the server using an ID and a password, and providing the other electronic device with access to content stored in the electronic device; and
establishing a network with other electronic device which is authenticated by the server using the registered temporary key, and providing the other electronic device with a more limited scope of access to the content compared to when the ID and the password are used.

2. The method as claimed in claim 1,
wherein the GUI comprises an item for setting at least one of an identification of the temporary key and a password of the temporary key.

3. The method as claimed in claim 1, wherein the transmitting (S830) the temporary key comprises transmitting information of the electronic device along with the temporary key to the server and registering the information of the electronic device and the temporary key with the server.

4. The method as claimed in claim 1, wherein the establishing (S850) the network comprises:
generating GUI including information that the network is established with the other electronic device.

5. The method as claimed in claim 1, further comprising:
the electronic device displaying a list including the other electronic device.

6. The method as claimed in claim 1, further comprising:
if a command is inputted by a user, the electronic device generating an other GUI for releasing the temporary key; and
upon receiving a command input by the user via the other GUI, the electronic device releasing the temporary key.

7. The method as claimed in claim 6, wherein the releasing the temporary key by the electronic device comprises inputting the temporary key to the other GUI.

8. The method as claimed in claim 1, wherein the sharing content of the electronic device comprises transmitting the content to, or receiving the content from, the other electronic device via the server or directly.

9. The method as claimed in claim 1, wherein the temporary key includes at least one of a disposable identification and a disposable password.

10. The method as claimed in claim 1, wherein the GUI is displayed by the electronic device when a button is pressed by the user.

11. The method as claimed in claim 1, further comprising displaying on the electronic device, an Internet Protocol, IP, address of the other electronic device and additional information of the other electronic device.

12. An electronic device (100) comprising:
a display (120) configured to display graphical user interface, GUI, for registering a temporary key for authentication ;
a communication interface (130) ; and
at least one processor (150) configured to:
if a temporary key is inputted by a user via the GUI, transmit the inputted temporary key from the electronic device to an external server (200) via the communication interface, so that the inputted temporary key is registered by the server,
control the communication interface to transmit the inputted temporary key from the electronic device to an external server via the communication interface, so that the inputted temporary key is registered by the server,
establish a network with other electronic device which is authenticated by the server using an ID and a password, and provide the other electronic device with access to content stored in the electronic device, and
establishing a network with other electronic device which is authenticated by the server using the registered temporary key, and providing the other electronic device with a more limited scope of access to the content compared to when the ID and the password are used.

13. The device as claimed in claim 12, wherein the GUI comprises an item for setting at least one of an identification of the temporary key and a password of the temporary key.

14. The device as claimed in claim 12, wherein the display (120) is further configured to display an Internet Protocol, IP, address of the other electronic device and additional information of the other electronic device.

15. The device as claimed in claim 12, wherein the temporary key is a one-time password, OTP, key comprising a temporary identification, a temporary password, and an expiration date.

## Patentansprüche

1. Verfahren zum gemeinsamen Nutzen von Inhalt einer elektronischen Vorrichtung, wobei das Verfahren Folgendes umfasst:
Anzeigen (S810) einer grafischen Benutzeroberfläche (GUI) auf der elektronischen Vorrichtung zum Registrieren eines temporären Schlüssels für Authentifizierung;
falls ein temporärer Schlüssel durch einen Benutzer über die GUI eingegeben wird (S820Y), Übertragen (S830) des eingegebenen temporären Schlüssels von der elektronischen Vorrichtung zu einem Server, so dass der eingegebene temporäre Schlüssel durch den Server registriert wird;
Einrichten eines Netzwerks mit einer anderen elektronischen Vorrichtung, die durch den Server unter Verwendung einer ID und eines Passworts authentifiziert wird, und Bereitstellen von Zugriff auf in der elektronischen Vorrichtung gespeicherten Inhalt für die andere elektronische Vorrichtung; und
Einrichten eines Netzwerks mit einer anderen elektronischen Vorrichtung, die durch den Server unter Verwendung des registrierten temporären Schlüssels authentifiziert wird, und Bereitstellen eines stärker eingeschränkten Umfangs an Zugriff auf den Inhalt für die andere elektronische Vorrichtung verglichen mit dem Fall, dass die ID und das Passwort verwendet werden.

2. Verfahren nach Anspruch 1,
wobei die GUI einen Posten zum Festlegen von mindestens einem Element einer Identifizierung des temporären Schlüssels und eines Passworts des temporären Schlüssels umfasst.

3. Verfahren nach Anspruch 1, wobei das Übertragen (S830) des temporären Schlüssels das Übertragen von Informationen der elektronischen Vorrichtung neben dem temporären Schlüssel zu dem Server und Registrieren der Informationen der elektronischen Vorrichtung und des temporären Schlüssels bei dem Server umfasst.

4. Verfahren nach Anspruch 1, wobei das Einrichten (S850) des Netzwerks Folgendes umfasst:
Erzeugen der GUI einschließlich Informationen, dass das Netzwerk mit der anderen elektronischen Vorrichtung eingerichtet ist.

5. Verfahren nach Anspruch 1, das ferner Folgendes umfasst:
die elektronische Vorrichtung, die eine Liste anzeigt, welche die andere elektronische Vorrichtung einschließt.

6. Verfahren nach Anspruch 1, das ferner Folgendes umfasst:
falls ein Befehl durch einen Benutzer eingegeben wird, Erzeugen einer weiteren GUI zum Freigeben des temporären Schlüssels durch die elektronische Vorrichtung; und
bei Empfangen eines Befehls, der durch den Benutzer über die andere GUI eingegeben wird, Freigabe des temporären Schlüssels durch die elektronische Vorrichtung.

7. Verfahren nach Anspruch 6, wobei das Freigeben des temporären Schlüssels durch die elektronische Vorrichtung das Eingeben des temporären Schlüssels in die andere GUI umfasst.

8. Verfahren nach Anspruch 1, wobei das gemeinsame Nutzen von Inhalt der elektronischen Vorrichtung das Übertragen des Inhalts zu, oder das Empfangen des Inhalts von der anderen elektronischen Vorrichtung über den Server oder direkt umfasst.

9. Verfahren nach Anspruch 1, wobei der temporäre Schlüssel zumindest ein Element einer Einweg-Identifizierung und eines Einweg-Passworts enthält.

10. Verfahren nach Anspruch 1, wobei die GUI durch die elektronische Vorrichtung angezeigt wird, wenn eine Taste durch den Benutzer gedrückt wird.

11. Verfahren nach Anspruch 1, das ferner das Anzeigen auf der elektronischen Vorrichtung einer Internet Protocol (IP)-Adresse der anderen elektronischen Vorrichtung und zusätzlicher Informationen der anderen elektronischen Vorrichtung umfasst.

12. Elektronische Vorrichtung (100), die Folgendes umfasst:
ein Display (120), das dazu ausgelegt ist, eine grafische Benutzeroberfläche (GUI) zum Registrieren eines temporären Schlüssels für Authentifizierung anzuzeigen;
eine Kommunikationsschnittstelle (130); und
mindestens einen Prozessor (150), der für Folgendes ausgelegt ist:
falls ein temporärer Schlüssel durch einen Benutzer über die GUI eingegeben wird, Übertragen des eingegebenen temporären Schlüssels von der elektronischen Vorrichtung zu einem externen Server (200) über die Kommunikationsschnittstelle, so dass der eingegebene temporäre Schlüssel durch den Server registriert wird,
Steuern der Kommunikationsschnittstelle zum Übertragen des eingegebenen temporären Schlüssels von der elektronischen Vorrichtung zu einem externen Server über die Kommunikationsschnittstelle, so dass der eingegebene temporäre Schlüssel durch den Server registriert wird,
Einrichten eines Netzwerks mit einer anderen elektronischen Vorrichtung, die durch den Server unter Verwendung einer ID und eines Passworts authentifiziert wird, und Bereitstellen von Zugriff auf in der elektronischen Vorrichtung gespeicherten Inhalt für die andere elektronische Vorrichtung, und
Einrichten eines Netzwerks mit einer anderen elektronischen Vorrichtung, die durch den Server unter Verwendung des registrierten temporären Schlüssels authentifiziert wird, und Bereitstellen eines stärker eingeschränkten Umfangs an Zugriff auf den Inhalt für die andere elektronische Vorrichtung verglichen mit dem Fall, dass die ID und das Passwort verwendet werden.

13. Vorrichtung nach Anspruch 12, wobei die GUI einen Posten zum Festlegen von mindestens einem Element einer Identifizierung des temporären Schlüssels und eines Passworts des temporären Schlüssels umfasst.

14. Vorrichtung nach Anspruch 12, wobei das Display (120) ferner dazu ausgelegt ist, eine Internet Protocol (IP)-Adresse der anderen elektronischen Vorrichtung und zusätzliche Informationen der anderen elektronischen Vorrichtung anzuzeigen.

15. Vorrichtung nach Anspruch 12, wobei der temporäre Schlüssel ein Einmal-Passwort (OTP)-Schlüssel ist, der eine temporäre Identifizierung, ein temporäres Passwort und ein Verfallsdatum umfasst.

## Revendications

1. Procédé pour partager un contenu d'un dispositif électronique, le procédé consistant :
à afficher (S810), sur le dispositif électronique, une interface utilisateur graphique (GUI) pour enregistrer une clé temporaire pour une authentification ;
si une clé temporaire est saisie (S820Y) par un utilisateur par le biais de l'interface GUI, à transmettre (S830) la clé temporaire saisie du dispositif électronique à un serveur de telle sorte que la clé temporaire saisie soit enregistrée par le serveur ;
à établir un réseau avec un autre dispositif électronique qui est authentifié par le serveur à l'aide d'un identifiant (ID) et d'un mot de passe et à fournir à l'autre dispositif électronique un accès à un contenu stocké dans le dispositif électronique ; et
à établir un réseau avec un autre dispositif électronique qui est authentifié par le serveur à l'aide de la clé temporaire enregistrée et à fournir à l'autre dispositif électronique une possibilité plus limitée d'accès au contenu par comparaison au cas où l'identifiant et le mot de passe sont utilisés.

2. Procédé selon la revendication 1, dans lequel l'interface GUI comprend un élément pour définir une identification de la clé temporaire et/ou un mot de passe de la clé temporaire.

3. Procédé selon la revendication 1, dans lequel la transmission (S830) de la clé temporaire consiste à transmettre des informations de transmission du dispositif électronique conjointement avec la clé temporaire au serveur et à enregistrer les informations du dispositif électronique et la clé temporaire avec le serveur.

4. Procédé selon la revendication 1, dans lequel l'établissement (S850) du réseau consiste :
à générer une interface GUI comportant des informations indiquant que le réseau est établi avec l'autre dispositif électronique.

5. Procédé selon la revendication 1, comprenant en outre :
le dispositif électronique qui affiche une liste comprenant l'autre dispositif électronique.

6. Procédé selon la revendication 1, comprenant en outre :
si une commande est saisie par un utilisateur, le dispositif électronique génère une autre interface GUI pour libérer la clé temporaire ; et
lors de la réception d'une commande saisie par l'utilisateur par le biais de l'autre interface GUI, le dispositif électronique libère la clé temporaire.

7. Procédé selon la revendication 6, dans lequel la libération de la clé temporaire par le dispositif électronique consiste à saisir la clé temporaire sur l'autre interface GUI.

8. Procédé selon la revendication 1, dans lequel le partage d'un contenu du dispositif électronique consiste à transmettre le contenu à l'autre dispositif électronique ou à recevoir le contenu en provenance de ce dernier par le biais du serveur ou directement.

9. Procédé selon la revendication 1, dans lequel la clé temporaire comprend une identification à usage unique et/ou un mot de passe à usage unique.

10. Procédé selon la revendication 1, dans lequel l'interface GUI est affichée par le dispositif électronique lorsqu'un bouton est pressé par l'utilisateur.

11. Procédé selon la revendication 1, consistant en outre à afficher sur le dispositif électronique une adresse de Protocole Internet (IP) de l'autre dispositif électronique et des informations supplémentaires de l'autre dispositif électronique.

12. Dispositif électronique (100) comprenant :
un dispositif d'affichage (120) configuré pour afficher une interface utilisateur graphique (GUI) pour enregistrer une clé temporaire pour une authentification ;
une interface de communication (130) ; et
au moins un processeur (150) configuré :
si une clé temporaire est saisie par un utilisateur par le biais de l'interface GUI, pour transmettre la clé temporaire saisie du dispositif électronique à un serveur externe (200) par le biais de l'interface de communication de telle sorte que la clé temporaire saisie soit enregistrée par le serveur,
pour commander l'interface de communication pour transmettre la clé temporaire saisie du dispositif électronique à un serveur externe par le biais de l'interface de communication de telle sorte que la clé temporaire saisie soit enregistrée par le serveur,
pour établir un réseau avec un autre dispositif électronique qui est authentifié par le serveur à l'aide d'un identifiant (ID) et d'un mot de passe et pour fournir à l'autre dispositif électronique un accès à un contenu stocké dans le dispositif électronique, et
pour établir un réseau avec un autre dispositif électronique qui est authentifié par le serveur à l'aide de la clé temporaire enregistrée et pour fournir à l'autre dispositif électronique une possibilité plus limitée d'accès au contenu par comparaison au cas où l'identifiant et le mot de passe sont utilisés.

13. Dispositif selon la revendication 12, dans lequel l'interface GUI comprend un élément pour définir une identification de la clé temporaire et/ou un mot de passe de la clé temporaire.

14. Dispositif selon la revendication 12, dans lequel le dispositif d'affichage (120) est en outre configuré pour afficher une adresse de Protocole Internet (IP) de l'autre dispositif électronique et des informations supplémentaires de l'autre dispositif électronique.

15. Dispositif selon la revendication 12, dans lequel la clé temporaire est une clé de mot de passe à usage unique (OTP) comprenant une identification temporaire, un mot de passe temporaire et une date d'expiration.
